(19) Europäisches Patentamt

European Patent Office

Office européen des brevets

(11) **EP 4 716 104 A1**

(12) **EUROPEAN PATENT APPLICATION**

(43) Date of publication:
**25.03.2026 Bulletin 2026/13**

(21) Application number: **24383012.2**

(22) Date of filing: **20.09.2024**

(51) International Patent Classification (IPC):
**H04B 7/024** *(2017.01)*     **H04B 7/0452** *(2017.01)*
**H04B 7/06** *(2006.01)*     **H04W 84/12** *(2009.01)*

(52) Cooperative Patent Classification (CPC):
**H04B 7/024; H04B 7/0452; H04B 7/0617**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Telefónica Innovación Digital, S.L.U.
28011 Madrid (ES)**

(72) Inventors:
• **GERACI, Giovanni
  28011 MADRID (ES)**
• **ARAPAKIS, Ioannis
  28011 MADRID (ES)**

(74) Representative: **Herrero & Asociados, S.L.
Edificio Aqua - Calle Agustín de Foxá, 4-10, 2ºA
28036 Madrid (ES)**

(54) **METHODS FOR COORDINATED BEAMFORMING TRANSMISSION**

(57)     A method (100) for coordinated beamforming transmission, CBF, scheduling in a wireless network that comprises a sharing access point (AP1), a shared access point (AP2), each associated with a plurality of station devices, STAs, wherein $N_{STA}$ is the total number of STAs.

**FIG. 3**

**Description**

Present invention generally relates methods for coordinated beamforming transmission, CBF, scheduling in a wireless network that comprises a sharing access point, a shared access point, each associated with a plurality of station devices, STAs.

**Background of the invention**

The development of Wi-Fi technology has seen continuous advancements to meet the increasing demands for higher data throughput, lower latency, and improved reliability. Traditional Wi-Fi systems employ contention-based access methods such as Carrier Sense Multiple Access with Collision Avoidance (CSMA/CA) and Listen-Before-Talk (LBT). These methods, while effective in managing access to the wireless medium, inherently introduce inefficiencies, particularly in environments with dense deployments of access points (APs).

Beamforming in Wi-Fi

Beamforming is a technology that focuses the Wi-Fi signal in a specific direction, rather than broadcasting it uniformly in all directions. This results in stronger and more reliable signals to the intended receivers (stations, or STAs). The introduction of beamforming in Wi-Fi standards, such as IEEE 802.11ac (Wi-Fi 5) and IEEE 802.11ax (Wi-Fi 6), has significantly enhanced the performance of wireless networks. These standards allow for multiple input multiple output (MIMO) and multi-user MIMO (MU-MIMO) technologies, which further optimize the usage of the wireless spectrum by allowing simultaneous transmissions to multiple users.

Challenges in Coordinated Beamforming

Despite the advantages, coordinated beamforming (CBF) poses several challenges, especially in unlicensed bands where multiple APs, potentially from different administrative domains, operate in proximity. The main issues include:

1. Interference Management: Simultaneous transmissions from multiple APs can lead to interference, degrading the performance of all involved devices.
2. Channel State Information (CSI): Accurate CSI is crucial for effective beamforming. However, obtaining and maintaining up-to-date CSI in dynamic environments is challenging due to factors like channel aging and mobility of STAs.
3. Spatial Reuse: Efficient spatial reuse requires precise coordination to ensure that the beamforming nulls (directions where signal power is minimized) are accurately placed to avoid interfering with neighboring APs' transmissions.

Existing Approaches

Current methods to manage these challenges typically involve:

- Alternating Transmissions: APs take turns in accessing the channel, which reduces interference but also limits the overall network throughput.
- Static Scheduling: Fixed schedules for transmissions are set, often not accounting for real-time variations in channel conditions, leading to suboptimal performance.
- Contention-Based Access: As previously mentioned, CSMA/CA and LBT are used to mitigate interference, but these methods do not fully leverage the potential of beamforming and spatial reuse, leading to inefficiencies.

Hence, there is a demand for next-generation Wi-Fi APs to efficiently manage coordinated beamforming transmissions, enhancing performance and reliability in unlicensed bands.
The present invention satisfied this demand.

**Description of the invention**

This invention provides a method for next-generation Wi-Fi access points (APs) to efficiently schedule coordinated beamforming (CBF) transmissions in the unlicensed band between a Sharing AP and a Shared AP.

Optimal Subset of STAs:

The proposed invention permits Scheduling an optimal subset of stations (STAs) for the sharing AP: This means selecting the best group of devices (stations) that should communicate with the sharing AP at a given time. The selection is based on certain criteria to maximize efficiency and minimize interference.

The proposed invention allows spatial reuse transmissions for an optimal subset of STAs from the shared AP: Similarly, choosing the best group of devices connected to the shared AP that can transmit data simultaneously without causing interference.

Precise Beams and Nulls:

The proposed invention allows the sharing AP to form precise beams to its selected STAs: Using beamforming technology, the Sharing AP can direct its signals accurately towards the chosen devices, improving signal strength and data rates.

The proposed invention allows pointing precise nulls to the selected Shared AP's STAs: At the same time, the sharing AP avoids sending signals in the direction of the devices connected to the shared AP, thus preventing interference. This is done by creating null points in those directions.

The proposed invention allows holding the vice versa for the shared AP: The Shared AP also forms precise beams towards its selected devices and nulls towards the sharing AP's devices.

The proposed invention obtains minimizing Interference:

Selected STAs do not perceive the transmit operations of the other AP: The devices connected to one AP do not detect or get interfered with by the transmissions from the other AP because of the precise beams and nulls.

Advantages:

The proposed invention obtains spatial reuse and system capacity enhancement:
Wireless channel can be reused without resorting to inefficient contention approaches: The method allows the same wireless channel to be used by both APs simultaneously without the need for traditional contention-based approaches. Channel reuse means that the same frequency can be used by multiple devices or access points (APs) at the same time without causing interference.

Significant system capacity enhancement: By avoiding these traditional methods and optimizing the use of the wireless channel through precise beams and nulls, the overall capacity and efficiency of the wireless network are significantly improved.

The proposed method allows for more efficient use of wireless channels by enabling both access points (APs) to use the same channel simultaneously without causing interference, by carrying out:

Beamforming: Both APs use beamforming to direct their signals precisely to their intended devices (STAs). This focused transmission reduces the likelihood of interfering with each other's signals.

Null Steering: The APs create null points (areas with minimal or no signal) towards the other AP's devices. This prevents their signals from interfering with each other's communications.

Hence, the proposed method optimizes the use of wireless channels by:

- Selecting the best devices for communication.
- Using beamforming to direct signals precisely.
- Creating null points to avoid interference; and
- Allowing simultaneous use of the same channel without traditional contention methods to avoid data collision. Advantageously, this leads to improved efficiency and higher network capacity.

There is currently no established approach to optimally schedule CBF transmissions in the unlicensed band. Compared to a baseline approach employing alternating transmissions between different APs, this invention facilitates coexistence and boosts spatial reuse between neighboring APs. Compared to a baseline approach that always schedules CBF transmissions irrespective of available spatial degrees of freedom, channel aging, and channel correlation, this invention prevents situations where the gains provided by an aggressive CBF spatial reuse may be outweighed by the interference and signaling overhead it entails. As a result, employing the present invention, the performance and reliability of telecommunications systems operating in unlicensed bands may dramatically increase.

A first aspect of the present invention relates to a method for coordinated beamforming transmission, CBF, scheduling in a wireless network that comprises a sharing access point, a shared access point, each associated with a plurality of station devices, STAs, wherein $N_{STA}$ is the total number of STAs, the method comprising calculating, by the sharing access point, a level of mobility of the plurality of STAs, calculating, by the shared access point, the level of mobility of the plurality of STAs, calculating, by the sharing access point, the correlation between channels of different station devices, STAs, calculating, by the shared access point, the correlation between channels of different station devices STAs, estimating, by the sharing access point, large-scale channel fading values, producing, by the sharing access point, a CBF transmission scheduling decision based on the level of mobility and channel information, and generating a set of scheduled STAs, Scheduled$_{STA}$, for data transmission or null-steering.

In a first example, calculating, by the sharing access point, a level of mobility of the plurality of STAs comprises computing autocorrelation functions for an estimated channel vector over time, and generating a first vector $AutoCorr_{STA,1}$ of length $N_{STA}$ based on the level of mobility

In a second example, calculating, by the shared access point, the level of mobility of the plurality of STAs comprises computing autocorrelation functions for the estimated channel vector over time, and generating a second vector $AutoCorr_{STA,2}$ of length $N_{STA}$ based on the level of mobility

In a third example, calculating, by the sharing access point, the correlation between channels of different station devices, STAs comprises computing the normalized inner product between estimated channel vectors for each pair of STAs and populating off-diagonal elements of a matrix $Corr_{STA,1}$ of size $N_{STA}$ x $N_{STA}$ with correlation data and diagonal elements with entries of $AutoCorr_{STA,1}$.

In preferred examples, the method further comprises storing the large-scale channel fading values in a vector $LSG_{STA}$ of size $N_{AP}$ x $N_{STA}$, wherein $N_{AP}$ = 2 is the number of cooperating APs.

In preferred examples, the level of mobility and channel information is contained in the $Corr_{STA,1}$ and $LSG_{STA}$.

In a fourth example, the method further comprising including in the Scheduled$_{STA}$ a plurality of STAs within the same Basic Service Set ,BSS, intra-BSS STAs, wherein a group of intra-BSS STAs are scheduled for transmission by the sharing access point via beamforming and that the group of intra-BSS STA's are scheduled for null-steering by the shared access point via radiation null-steering.

In a fifth example, the method further comprising including in the ScheduledSTA a plurality of STAs placed at Overlapping Basic Service Set, OBSS STAs, wherein a group of OBSS STAs are scheduled for null-steering by the sharing access point via radiation null-steering and that the group of OBSS STAs are scheduled for transmission by the shared access point via beamforming.

In a first alternative, the autocorrelation functions are computed based on real-time channel estimation.

In a second alternative, the autocorrelation functions are computed by leveraging statistical information based on previous estimates.

In preferred examples, the CBF transmission scheduling decision is made dynamically to account for changes in the information contained in $Corr_{STA,1}$, $Corr_{STA,2}$, and $LSG_{STA}$ over time.

A second aspect of the present invention refers to a system for coordinated beamforming (CBF) transmission scheduling in a wireless network.

The system comprises a sharing access point configured to estimate the level of mobility of a plurality of STAs, estimate the correlation between channels of different STAs, estimate large-scale channel fading values and produce a CBF transmission scheduling decision based on the level of mobility and channel information, and generate a set of scheduled STAs, ScheduledSTA, for transmission or null-steering.

The system further comprises a shared access point AP2 configured to estimate the level of mobility of all STAs and estimate the correlation between channels of different STAs.

## Brief description of the drawings

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a method for coordinated beamforming transmission according to the present invention.

Figures 2 and 3 show an example scenario for scheduling coordinated beamforming transmissions according to the present invention.

Figure 4 shows an example of Adaptive Transmission Scheduling transmission using a centralized Multi-Objective Reinforcement Learning.

## Description of a preferred embodiment

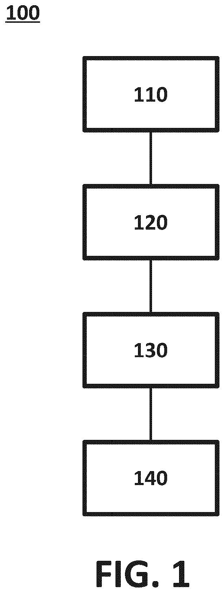

Figure 1 shows the method (100) for coordinated beamforming transmission, CBF, scheduling in a wireless network that comprises a sharing access point (AP1), a shared access point (AP2), each associated with a plurality of station devices, STAs, wherein $N_{STA}$ is the total number of STAs.

The method (100) comprises calculating (110), by the sharing access point (AP1), a level of mobility of the plurality of STAs, preferably by computing autocorrelation functions for an estimated channel vector over time, and generating a first vector $AutoCorr_{STA,1}$ of length $N_{STA}$ based on the level of mobility.

The method (100) comprises calculating (110), by the shared access point (AP2), the level of mobility of the plurality of STAs preferably by computing autocorrelation functions for the estimated channel vector over time, and generating a second vector $AutoCorr_{STA,2}$ of length $N_{STA}$ based on the level of mobility.

The method (100) comprises calculating (120), by the sharing access point (AP1), the correlation between channels of different station devices, STAs preferably by computing the normalized inner product between estimated channel vectors for each pair of STAs and populating off-diagonal elements of a matrix $Corr_{STA,1}$ of size $N_{STA} \times N_{STA}$ with correlation data and diagonal elements with entries of $AutoCorr_{STA,1}$.

The method (100) comprises calculating (120), by the shared access point (AP2), the correlation between channels of different station devices STAs preferably by computing the normalized inner product between estimated channel vectors for each pair of STAs and populating off-diagonal elements of a matrix $Corr_{STA,2}$ of size $N_{STA} \times N_{STA}$ with correlation data and diagonal elements with entries of $AutoCorr_{STA,2}$.

The method (100) comprises estimating (130), by the sharing access point (AP1), large-scale channel fading values and preferably storing them in a vector $LSG_{STA}$ of size $N_{AP} \times N_{STA}$, wherein $N_{AP} = 2$ is the number of cooperating APs.

The method (100) comprises producing (140), by the sharing access point (AP1), a CBF transmission scheduling decision based on the level of mobility and channel information preferably contained in $Corr_{STA,1}$ and $LSG_{STA}$, and generating a set of scheduled STAs, $Scheduled_{STA}$, for data transmission or null-steering.

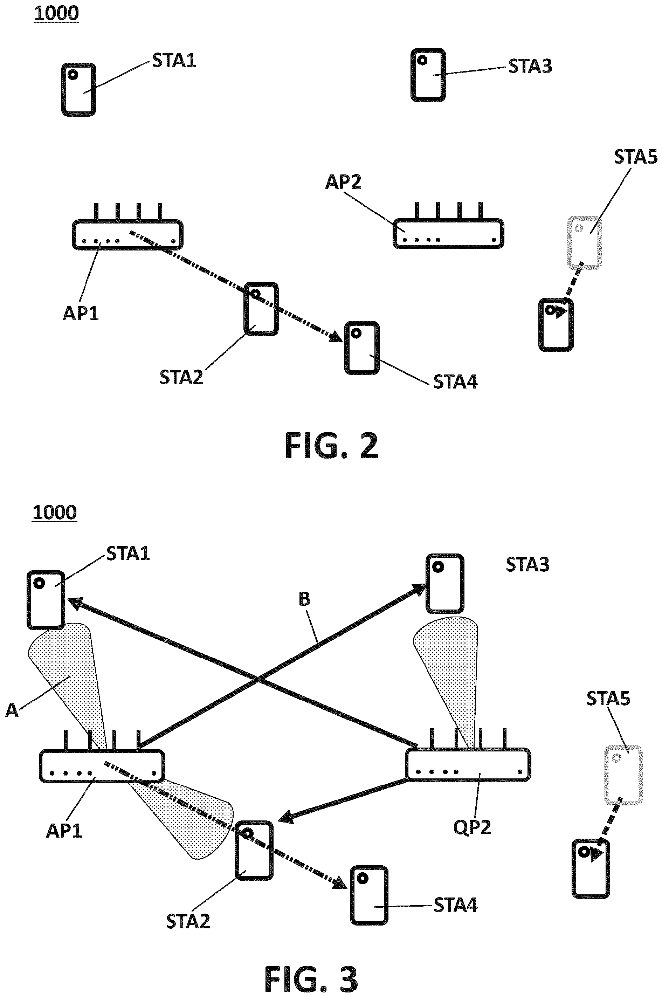

An example scenario (1000) shown in figure 2 according to a preferred embodiment of the invention comprises a sharing AP ($AP_1$) and a shared AP ($AP_2$), each access point is associated with a number of STAs. The sharing AP ($AP_1$) is associated to $N_{STA,1}$ STAs and the shared AP ($AP_2$) is associated to $N_{STA,2}$ STAs.

Hence, $N_{STA} = N_{STA,1} + N_{STA,2}$ is the total number of STAs. Taking the perspective of the sharing AP ($AP_1$), there is $N_{STA,1}$ intra-BSS STAs (STA1, STA2) associated to the sharing AP ($AP_1$)) and $N_{STA,2}$ OBSS STAs (STA3, STA4, STA5) associated to the shared AP ($AP_2$).

## Step #1

The first step of the method (100) comprises calculating (110), by the sharing access point (AP1), a level of mobility of the total number of STAs by computing autocorrelation functions for an estimated channel vector over time, and generating a first vector $AutoCorr_{STA,1}$ of length $N_{STA}$ based on the level of mobility.

The first step of the method (100) also comprises calculating (110), by the shared access point (AP2), the level of mobility of the total number of STAs by computing autocorrelation functions for the estimated channel vector over time, and generating a second vector $AutoCorr_{STA,2}$ of length $N_{STA}$ based on the level of mobility.

This first step can be carried out by computing an autocorrelation function for the estimated channel vector over time, which works as a proxy for the channel coherence time between the sharing AP ($AP_1$) and each $N_{STA,2}$ OBSS STAs (STA3, STA4, STA5). The result is a vector $AutoCorr_{STA,1}$ of length $N_{STA}$.

Note that this computation can be either:

(i) Based on real-time channel estimations; or
(ii) Leverage statistical information based on previous estimates.

The specific signaling required to acquire OBSS CSI may be specified by the upcoming IEEE 802.11bn amendment.

Rationale: This information is useful for scheduling CBF transmissions since static OBSS STAs are more suitable for null-steering based either on:

(i) Real-time channel estimates, which do not age quickly; or
(ii) Statistical, covariance-based channel estimates, which do not need to be acquired frequently and can closely approximate real-time channel estimates.

The same estimate is performed at the shared access point (AP2), generating the vector $AutoCorr_{STA,2}$.

### Step #2

The second step of the method (100) comprises calculating (120), by the sharing access point (AP1), the correlation between channels of different station devices, STAs by computing the normalized inner product between estimated channel vectors for each pair of STAs and populating off-diagonal elements of a matrix $Corr_{STA,1}$ of size $N_{STA}$ x $N_{STA}$ with correlation data and diagonal elements with entries of $AutoCorr_{STA,1}$;

The method (100) comprises calculating (120), by the shared access point (AP2), the correlation between channels of different station devices STAs by computing the normalized inner product between estimated channel vectors for each pair of STAs and populating off-diagonal elements of a matrix $Corr_{STA,2}$ of size $N_{STA}$ x $N_{STA}$ with correlation data and diagonal elements with entries of $AutoCorr_{STA,2}$;

While in the first step the sharing access point (AP1) estimates the autocorrelation of STA's channel in time, in the second step the sharing access point (AP1) estimates the correlation between channels of different STAs.

This can be done by computing the normalized inner product between estimated channel vectors for each pair of STAs. The information acquired can be stored in a matrix $Corr_{STA,1}$ of size $N_{STA}$ x $N_{STA}$. Specifically, the information acquired in the second step will populate the off-diagonal elements of $Corr_{STA,1}$, whereas the $N_{STA}$ entries of $AutoCorr_{STA,1}$ acquired in the first step will populate the diagonal of the matrix $Corr_{STA,1}$.

Rationale: This information is useful for the sharing access point (AP1) to be aware of the channel subspace occupied by the STAs. Specifically, the sharing access point (AP1) can observe which STAs have orthogonal channels (allowing to place beams/nulls simultaneously on them) and which have highly correlated channels (requiring scheduling these STAs for beams/nulls on separate time-frequency resource).

The same estimate is performed at the Shared AP, generating the matrix $Corr_{STA,2}$.

### Step #3

The third step of the method (100) comprises estimating (130), by the sharing access point (AP1), large-scale channel fading values and storing them in a vector $LSG_{STA}$ of size $N_{AP}$ x $N_{STA}$, wherein $N_{AP} = 2$ is the number of cooperating APs.

While the first step focuses on the speed of variation of the channels and the second step focuses on their directionality, in the third step the sharing access point (AP1) estimates how strong the links to each intra-BSS and OBSS STA are.

This step can be carried out by storing the large-scale channel fading values in a vector $LSG_{STA}$ of size $N_{AP}$ x $N_{STA}$, with $N_{AP} = 2$ denoting the number of cooperating APs.

Rationale: This information can be useful for the sharing access point (AP1) to schedule CBF transmissions, taking into account that it can be easier to suppress interference generated towards weaker OBSS links than towards stronger OBSS links (e.g., those in line-of-sight condition and in close proximity).

### Step #4

The fourth step comprises producing (140), by the sharing access point (AP1), a CBF transmission scheduling decision based on the information contained in $Corr_{STA,1}$ and $LSG_{STA}$, and generating a set of scheduled STAs, $Scheduled_{STA}$, for data transmission or null-steering.

Availing of the information contained in matrix $Corr_{STA,1}$ and vector $LSG_{STA}$ in the fourth step, the sharing access point (AP1) produces a CBF transmission scheduling decision in the form of a set of STAs, denoted $Scheduled_{STA}$, which can contain both intra-BSS and OBSS STAs. Specifically:

Including an intra-BSS STA in the set $Scheduled_{sra}$ implies that said STA can be scheduled for transmission by the sharing access point (AP1) i.e. a spatial stream of data will be transmitted to said STA via beamforming (A).

Including an OBSS STA in the set $Scheduled_{sra}$ implies that said OBSS STA can be scheduled for null-steering by the sharing access point (AP1) i.e. the sharing access point (AP1) will suppress interference towards said STA via radiation null-steering (B).

Additionally, the vice versa can be hold:

- The OBSS STA can be scheduled for transmission by the shared access point (AP2) i.e. a spatial stream of data will be transmitted by the shared access point (AP2) to said STA via beamforming (A).

- The Intra-BSS STA can receive null-steering by the shared access point (AP2) i.e. the shared access point (AP2) will suppress interference towards said STA via radiation null-steering (B).

Since the information contained in $Corr_{STA,1}$, $Corr_{STA,2}$, and $LSG_{STA}$ is subject to change over time, this scheduling decision can be made dynamically by the sharing access point ($AP_1$).

In figure 2, the sharing access point (AP1) has two intra-BSS STAs that can potentially be scheduled: $STA_1$ and $STA_2$, i.e. $N_{STA,1}$ intra-BSS STAs (STA1, STA2).

The sharing access point (AP1) sees three OBSS STAs: $STA_3$, $STA_4$, and STAs, i.e. $N_{STA,2}$ OBSS STAs (STA3, STA4, STA5).

Since $N_{STA,1}$ intra-BSS STAs ($STA_2$) and $N_{STA,2}$ OBSS STAs ($STA_4$) lie in the same direction, they have correlated channels from the perspective of the sharing access point (AP1). This suggests that $N_{STA,2}$ OBSS STAs ($STA_4$) should not be scheduled for null-steering and should not be allocated a spatial reuse opportunity.

The channel to $N_{STA,2}$ OBSS STAs ($STA_5$) is not correlated with other STAs. Moreover, due to the distance between the sharing access point (AP1) and $N_{STA,2}$ OBSS STAs (STAs), this channel can be weak and would allow suppressing interference well. However, $N_{STA,2}$ OBSS STAs ($STA_5$) can be mobile and the channel estimate available at the sharing access point (AP1) may be outdated. This suggests that $N_{STA,2}$ OBSS STAs ($STA_5$) should not be scheduled for null-steering.

Following the proposed steps, the sharing access point (AP1) computes the values shown in Tables 1, 2, and 3. In these tables, highly unfavorable and moderately unfavorable values are marked in circle and triangle, respectively. For instance, unfavorable situations are as follows:

- Low channel autocorrelation for STA, e.g., for STAs on the diagonal of $Corr_{STA,1}$ and $Corr_{STA,2}$.
- High channel correlation between two STAs, e.g., between $STA_2$ - $STA_4$ in $Corr_{STA,1}$.
- Strong link between an AP and STAs associated to the other AP, e.g., (to a moderate extent) between $AP_1$ and {$STA_3$, $STA_4$} and between $AP_2$ and $STA_2$.

| $Corr_{STA,1}$ | $STA_1$ | $STA_2$ | $STA_3$ | $STA_4$ | $STA_5$ |
|---|---|---|---|---|---|
| $STA_1$ | High | Low | Low | Low | Low |
| $STA_2$ | Low | High | Low | High (circle) | Med (triangle) |
| $STA_3$ | Low | Low | High | Low | Low |
| $STA_4$ | Low | High (circle) | Low | High | Med (triangle) |
| $STA_5$ | Low | Med (triangle) | Low | Med (triangle) | Low (circle) |

Table 1: Example of $Corr_{STA,1}$ computed at the sharing access point (AP1). All STAs have high channel autocorrelation (on the diagonal), except $STA_5$ due to its mobility. The matrix also reflects the moderate channel correlation between $STA_2 - STA_5$ and $STA_4 - STA_5$ and the strong correlation between $STA_2$–$STA_4$.

| $Corr_{STA,1}$ | $STA_1$ | $STA_2$ | $STA_3$ | $STA_4$ | $STA_5$ |
|---|---|---|---|---|---|
| $STA_1$ | High | Low | Low | Low | Low |
| $STA_2$ | Low | High | Low | Med (triangle) | Low |
| $STA_3$ | Low | Low | High | Low | Low |
| $STA_4$ | Low | Med (triangle) | Low | High | Med |
| $STA_5$ | Low | Low | Low | Low | Low (circle) |

Table 2: Example of Corr$_{STA,2}$ computed at the Shared AP. Again, all STAs have high channel autocorrelation, except STA$_5$ due to its mobility. However, the channel correlation pattern across STAs can be now different, since it is seen from the spatial perspective of the Shared AP.

| LSG$_{STA}$ | STA$_1$ | STA$_2$ | STA$_3$ | STA$_4$ | STA$_5$ |
|---|---|---|---|---|---|
| AP$_1$ | Strong | Strong | Med | Med | Weak |
| AP$_2$ | Weak | Med | Strong | Strong | Strong |

Table 3: Example of LSG$_{STA}$, indicating strong, weak, medium links between each AP and the five STAs.

In the above example, the set Scheduled$_{STA}$ will include: STA$_1$, STA$_2$, and STA$_3$. Therefore, as shown in Figure 3, a CBF transmission will be scheduled as follows:

- The sharing access point (AP$_1$) will use beamforming (A) to transmit spatial streams to STA$_1$ and STA$_2$ and will use null-steering to suppress interference towards STA$_3$.
- The shared access point (AP$_2$) will use beamforming to transmit spatial streams to STA$_3$ and will use null-steering (B) to suppress interference towards STA$_1$ and STA$_2$.

This allows the shared access point (AP$_2$) to exploit a spatial reuse opportunity and to send data to STA$_3$ without having to wait for a new channel contention. At the same time, the concurrent transmissions between (AP$_1$ - STA$_1$,) (AP$_1$ - STA$_2$,) and (AP$_2$ - STA$_3$), do not cause interference to one another.

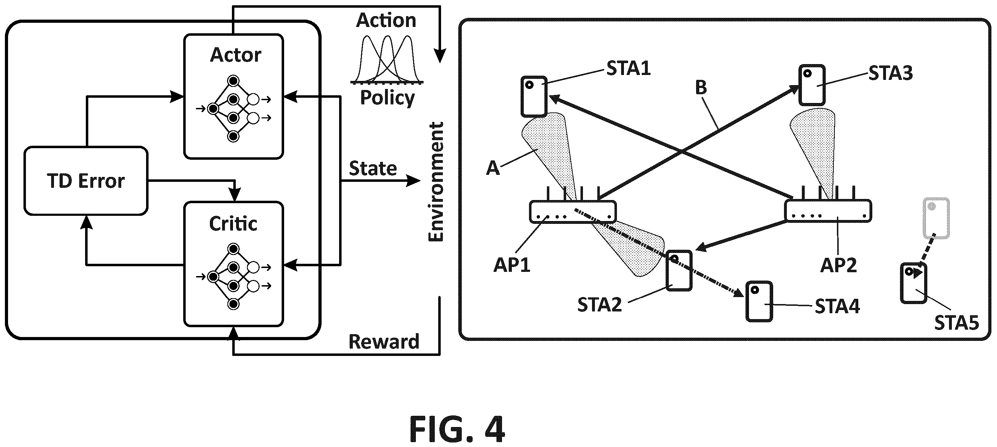

Figure 4 shows an example of Adaptive Transmission Scheduling using a centralized Multi-Objective Reinforcement Learning. In this setting, the RL agent (i.e. the scheduler) implements a policy that achieves a fair resource allocation among STAs while optimizing data throughput and minimizing idle time.

In the setting illustrated by Fig. 4, the RL agent observes the current state of the environment and selects actions that maximize the cumulative reward over time. It learns through interactions with the environment (online) or via training with historical data (offline). For the algorithm implementation, several architectures such as Deep Q-Networks (DQN), Proximal Policy Optimization (PPO), or Advantage Actor-Critic (A2C) can be considered.

**Policy Shaping with Fairness Measure**

Fairness(s, a, s') represents the fairness measure, which can be computed based on the ratio of expected data throughput to historical data throughput for each STA. For instance, the latter may be computed with a moving average. A ratio greater than 1.0 prioritizes the STA, while a ratio less than 1.0 deprioritizes it.

The policy parameterized by fairness measures guides action selection to achieve fair resource allocation among STAs while optimizing data throughput and minimizing idle time. Specifically, when shaping the policy, one can incorporate the fairness measure as a factor in determining the likelihood of selecting each action. This can be achieved by using a weighted probability distribution over possible actions, where the weights are determined based on the fairness measure. For example:

- The probability of selecting an action for a particular STA could be proportional to its fairness measure. A higher fairness measure would correspond to a lower probability of selecting actions for that STA, encouraging more equitable resource allocation.

- Alternatively, the inverse of the fairness measure could be used as the weight, ensuring that STAs with lower fairness measures are prioritized in action selection.

The dynamic action space update step can then be defined as follows:

Let $F_i$ denote the fairness measure for STA$_i$, which is the ratio of expected data throughput to historical data throughput. It is defined the action space $A_i$ for STA$_i$ as follows:

$$A_i = \{\text{Scheduled, Not Scheduled}\}$$

It is possible to shape the policy by adjusting the probabilities of action selection for each $STA_i$ based on the fairness measure $F_i$. Let $\pi_i(action)$ denote the policy for $STA_i$, then the policy can be obtained as follows:

$$\pi_i(action) = \frac{e^{wF_i}}{\sum_{actions \in A_i} e^{wF_i}} \cdot$$

**Claims**

1. A method (100) for coordinated beamforming transmission, CBF, scheduling in a wireless network that comprises a sharing access point (AP1), a shared access point (AP2), each associated with a plurality of station devices, STAs, wherein $N_{STA}$ is the total number of STAs, the method comprising:

    - Calculating (110), by the sharing access point (AP1), a level of mobility of the plurality of STAs;
    - Calculating (110), by the shared access point (AP2), the level of mobility of the plurality of STAs;
    - Calculating (120), by the sharing access point (AP1), the correlation between channels of different station devices, STAs;
    - Calculating (120), by the shared access point (AP2), the correlation between channels of different station devices STAs;
    - Estimating (130), by the sharing access point (AP1), large-scale channel fading values; and
    - Producing (140), by the sharing access point (AP1), a CBF transmission scheduling decision based on the level of mobility and channel information, and generating a set of scheduled STAs, Scheduled$_{STA}$, for data transmission or null-steering.

2. The method according to claim 1, wherein calculating (110), by the sharing access point (AP1), a level of mobility of the plurality of STAs comprises computing autocorrelation functions for an estimated channel vector over time, and generating a first vector $AutoCorr_{STA,1}$ of length $N_{STA}$ based on the level of mobility.

3. The method according to any of claims 1 or 2, wherein calculating (110), by the shared access point (AP2), the level of mobility of the plurality of STAs comprises computing autocorrelation functions for the estimated channel vector over time, and generating a second vector $AutoCorr_{STA,2}$ of length $N_{STA}$ based on the level of mobility.

4. The method according to any of the preceding claims, wherein calculating (120), by the sharing access point (AP1), the correlation between channels of different station devices, STAs comprises computing the normalized inner product between estimated channel vectors for each pair of STAs and populating off-diagonal elements of a matrix $Corr_{STA,1}$ of size $N_{STA}$ x $N_{STA}$ with correlation data and diagonal elements with entries of $AutoCorr_{STA,1}$.

5. The method according to any of the preceding claims, that further comprises storing the large-scale channel fading values in a vector $LSG_{STA}$ of size $N_{AP}$ x $N_{STA}$, wherein $N_{AP}$ = 2 is the number of cooperating APs.

6. The method according to any of the preceding claims, wherein the mobility and channel information is contained in the $Corr_{STA,1}$ and $LSG_{STA}$.

7. The method according to any of the previous claims, further comprising including in the Scheduled$_{STA}$ a plurality of STAs within the same Basic Service Set ,BSS, intra-BSS STAs, wherein a group of intra-BSS STAs (STA1, STA2) are scheduled for transmission by the sharing access point (AP1) via beamforming (A) and that the group of intra-BSS STA's (STA1, STA2) are scheduled for null-steering by the shared access point (AP2) via radiation null-steering (B).

8. The method according to any of the previous claims, further comprising including in the ScheduledSTA a plurality of STAs placed at Overlapping Basic Service Set, OBSS STAs, wherein a group of OBSS STAs (STA3, STA4, STA5) are scheduled for null-steering by the sharing access point (AP1) via radiation null-steering (B) and that the group of OBSS STAs (STA3, STA4, STA5) are scheduled for transmission by the shared access point (AP2) via beamforming (A).

9. The method according to claims 1 to 8, wherein the autocorrelation functions are computed based on real-time channel estimation.

10. The method according to claims 1 to 8, wherein the autocorrelation functions are computed by leveraging statistical information based on previous estimates.

11. The method according to any of the preceding claims, wherein the CBF transmission scheduling decision is made dynamically to account for changes in the information contained in $Corr_{STA,1}$, $Corr_{STA,2}$, and $LSG_{STA}$ over time.

12. A system for coordinated beamforming (CBF) transmission scheduling in a wireless network, the system comprising:

- a sharing access point (AP1) configured to:

i. Estimate the level of mobility of a plurality of STAs;
ii. Estimate the correlation between channels of different STAs;
iii. Estimate large-scale channel fading values;
iv. Produce a CBF transmission scheduling decision based on the mobility and channel information, and generate a set of scheduled STAs, ScheduledSTA, for transmission or null-steering; and

- a shared access point (AP2) configured to:

i. Estimate the level of mobility of all STAs; and
ii. Estimate the correlation between channels of different STAs.

100

FIG. 1

1000

**FIG. 2**

1000

**FIG. 3**

FIG. 4

## EUROPEAN SEARCH REPORT

**Application Number**

EP 24 38 3012

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/263043 A1 (ZHOU YAN [US] ET AL) 13 September 2018 (2018-09-13) * paragraphs [0078], [0095], [0101]-[0107] and [0110]-[0116]; figure 3 * | 1-12 | INV. H04B7/024 H04B7/0452 H04B7/06 |
| | ----- | | ADD. |
| A | US 2018/337709 A1 (ZOU CHAO [US] ET AL) 22 November 2018 (2018-11-22) * paragraphs [0040], [0072] - [0073]; figure 1 * | 1-12 | H04W84/12 |
| | ----- | | |
| A | US 2024/146370 A1 (CHANDRASEKAR MANIKANDAN [IN] ET AL) 2 May 2024 (2024-05-02) * paragraphs [0020] - [0021]; figure 5 * | 1-12 | |
| | ----- | | |

**TECHNICAL FIELDS SEARCHED (IPC)**

H04B
H04W

The present search report has been drawn up for all claims

| Place of search | Date of completion of the search | Examiner |
|---|---|---|
| Munich | 13 February 2025 | El Hajj Shehadeh, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3012

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| US 2018263043 A1 | 13-09-2018 | CN | 110463059 A | 15-11-2019 |
| | | US | 2018263043 A1 | 13-09-2018 |
| | | US | 2021045135 A1 | 11-02-2021 |
| | | WO | 2018169800 A1 | 20-09-2018 |
| US 2018337709 A1 | 22-11-2018 | US | 2018337709 A1 | 22-11-2018 |
| | | WO | 2018212847 A1 | 22-11-2018 |
| US 2024146370 A1 | 02-05-2024 | US | 2024146370 A1 | 02-05-2024 |
| | | WO | 2024091766 A1 | 02-05-2024 |

EPO FORM P0459

For more details about this annex : see Official Journal of the European Patent Office, No. 12/82